# EUROPÄISCHE PATENTSCHRIFT

(11) **EP 2 707 265 B1**
(45) Veröffentlichungstag und Bekanntmachung des Hinweises auf die Patenterteilung: **11.03.2015**
(21) Anmeldenummer: 12718085.9
(22) Anmeldetag: 30.04.2012
(51) Int. Cl.: B60W 10/06, B60W 10/08, B60W 20/00, B60W 30/188, B60K 6/20, B60W 30/192, B60W 50/14

(54) **VERFAHREN ZUR AKTIVIERUNG EINES VERBRENNUNGSMOTORS FÜR EIN FAHRZEUG SOWIE ENTSPRECHENDE STEUERUNG UND FAHRZEUG**
METHOD FOR ACTIVATING AN INTERNAL COMBUSTION ENGINE FOR A VEHICLE AND CORRESPONDING CONTROLLER AND VEHICLE
PROCÉDÉ D'ACTIVATION D'UN MOTEUR À COMBUSTION INTERNE POUR UN VÉHICULE, COMMANDE CORRESPONDANTE ET VÉHICULE

(30) Priorität: 11.05.2011 DE 102011101138
(43) Veröffentlichungstag der Anmeldung: 19.03.2014
(73) Patentinhaber: Volkswagen Aktiengesellschaft, 38440 Wolfsburg (DE)
(72) Erfinder: THIAMTONG, Vasoontara, 38442 Wolfgsburg (DE); KRAFZIG, Benjamin, 38165 Lehre (DE)
(86) Internationale Anmeldenummer: PCT/EP2012/001866
(87) Internationale Veröffentlichungsnummer: WO 2012/152400

(56) Entgegenhaltungen:
- EP-A1- 2 206 622
- EP-A2- 2 056 073
- DE-A1-102008 000 577
- DE-A1-102008 029 453
- DE-A1-102009 027 001
- DE-A1-102009 049 497
- US-A1- 2010 305 796

## Beschreibung

Die vorliegende Erfindung betrifft ein Verfahren, um einen Verbrennungsmotor eines Fahrzeugs (insbesondere eines Hybridfahrzeugs) zum Antrieb des Fahrzeugs zu aktivieren sowie eine entsprechend ausgestaltete Steuerung und ein entsprechend ausgestaltetes Fahrzeug.

Die WO 02/26520 A1 offenbart einen Drehmomentmanager, welcher abhängig von einem Soll-Radmoment einen Elektromotor und einen Verbrennungsmotor betätigt.

Die DE 196 37 210 A1 beschreibt eine Antriebsstrangsteuerung, welche abhängig von Stellungen des Fahrpedals und des Bremspedals Antriebsquellen und verzögernde Einheiten steuert.

Die DE 698 31 468 T2 beschreibt ein Antriebssteuerungssystem, mit welchem ein Ruck verhindert wird, welcher andernfalls erzeugt würde, wenn eine Brennkraftmaschine gestartet wird, während das Fahrzeug durch einen Elektromotor betrieben wird.

Im Stand der Technik wird bei Erreichen des momentan bereitstellbaren Antriebsmoments der Verbrennungsmotor angelassen. Der Fahrer wird über einen Druckpunkt am Gaspedal benachrichtigt, vgl. z.B. DE 10 2008 000 577. Es ist ebenfalls bekannt, das Anlassen des Verbrennungsmotors zu verzögern. Die Dauer der Verzögerung hängt von der Gaspedalposition ab, vgl. EP-A-2 206 622.

Nach dem Stand der Technik wird bei einem Hybridfahrzeug, welches zum Antrieb des Fahrzeugs sowohl einen Elektromotor als auch einen Verbrennungsmotor umfasst, der Verbrennungsmotor gestartet, wenn das von dem Fahrer vorgegebene Sollmoment über demjenigen Moment liegt, welches von dem Elektromotor bereitgestellt werden kann. Da der Fahrer keine Information vorliegen hat, wann das in der Regel über das Fahrpedal vorgegebene Sollmoment größer als das von dem Elektromotor bereitgestellte Moment ist, ist es für den Fahrer schwer, sein Fahrzeug ausschließlich mit dem Elektromotor anzutreiben.

Daher stellt sich die vorliegende Erfindung die Aufgabe, die Möglichkeit, ein Fahrzeug nur durch den Elektromotor zu betreiben, zumindest zu erleichtern.

Erfindungsgemäß wird diese Aufgabe durch ein Verfahren zur Aktivierung eines Verbrennungsmotors für ein Fahrzeug nach Anspruch 1, durch eine Steuerung nach Anspruch 9 und durch ein Fahrzeug nach Anspruch 11 gelöst. Die abhängigen Ansprüche definieren bevorzugte und vorteilhafte Ausführungsformen der vorliegenden Erfindung.

Im Rahmen der vorliegenden Erfindung wird ein Verfahren zur Aktivierung eines Verbrennungsmotors für ein Fahrzeug (insbesondere für ein Hybridfahrzeug) bereitgestellt. Dabei umfasst das Fahrzeug einen Elektromotor und den Verbrennungsmotor, welche beide zum Antrieb des Fahrzeugs ausgestaltet sind. Der Verbrennungsmotor wird automatisch aktiviert, wenn ein beispielsweise über ein Fahrpedal des Fahrzeugs vorgegebenes Sollantriebsmoment größer als eine Momentensumme ist. Dabei setzt sich diese Momentensümme aus einem von dem Elektromotor aktuell bereitstellbaren Antriebsmoment und einem Zusatzmoment, welches größer als 0 ist, zusammen. Unter dem von dem Elektromotor aktuell bereitstellbaren Antriebsmoment wird dabei das Antriebsmoment verstanden, welches zu dem jeweiligen Zeitpunkt maximal von dem Elektromotor zum Antrieb des Fahrzeugs zur Verfügung gestellt werden kann.

Indem der Verbrennungsmotor nicht bereits dann aktiviert oder gestartet wird, wenn das Sollantriebsmoment größer als das von dem Elektromotor bereitstellbare Antriebsmoment ist, sondern erst dann aktiviert wird, wenn das Sollantriebsmoment um das Zusatzmoment größer als das von dem Elektromotor bereitstellbare Antriebsmoment ist, existiert vorteilhafterweise eine Phase, in welcher der Fahrer beispielsweise mit seinem Fahrpedal das Sollantriebsmoment vergrößert (indem er das Fahrpedal weiter durchgedrückt), in welcher aber das Antriebsmoment des Fahrzeugs nicht erhöht wird, da der Verbrennungsmotor noch nicht aktiviert worden ist. Dadurch kann der Fahrer intuitiv durch entsprechend dosiertes Gasgeben (dosiertes Zustellen des Fahrpedals) den maximal verfügbaren Bereich des Elektromotors intuitiv erfassen, ohne diesen Bereich zu übertreten. Dadurch kann der Fahrer einen Wechsel in den hybridischen Fahrbetrieb (mit Aktivierung des Verbrennungsmotors) vermeiden, wodurch das Erlebnis, rein elektrisch zu fahren (was auch als "E-Fahren" bezeichnet wird) merklich erweitert wird.

Das Zusatzmoment kann dabei von der aktuellen Geschwindigkeit des Fahrzeugs und/oder von dem von dem Elektromotor aktuell bereitstellbaren Antriebsmoment abhängen.

Insbesondere ist das Zusatzmoment umso größer, je höher die Geschwindigkeit des Fahrzeugs ist. In ähnlicher Weise ist das Zusatzmoment insbesondere umso größer, je höher das verfügbare oder bereitstellbare Antriebsmoment des Elektromotors ist. Beispielsweise könnte das Zusatzmoment 50 Nm bzw. 20 Nm betragen, wenn das bereitstellbare Antriebsmoment des Elektromotors 100 bzw. 50 Nm beträgt.

Bei einer hohen Belastung des elektrischen Systems des Fahrzeugs (z. B: bei einem hohen Stromverbrauch der Klimaanlage) und bei damit verbundenen Reduktionsmaßnahmen kann das Zusatzmoment entsprechend verändert werden. Zum Beispiel könnte das Zusatzmoment umso kleiner festgesetzt werden, je größer die Belastung durch das elektrische System des Fahrzeugs ist.

Gemäß einer bevorzugten erfindungsgemäßen Ausführungsform wird der Verbrennungsmotor nur dann automatisch aktiviert, wenn ein Fahrpedalgradient größer als ein vorbestimmter Schwellenwert ist. Dabei wird unter dem Fahrpedalgradient die Geschwindigkeit verstanden, mit welcher das Fahrpedal des Fahrzeugs niedergedrückt wird.

Zur Ermittlung der Stellung des Fahrpedal das existieren zwei Möglichkeiten. Entweder entspricht die Stellung des Fahrpedals einem Winkel (dem Fahrpedalwinkel), oder die Stellung des Fahrpedals entspricht einem Abstand (einer Strecke) zwischen dem Fahrpedal und einem definierten Punkt im Fahrzeug. In jedem Fall kann über den Fahrpedalwinkel oder über die entsprechende Strecke das Sollantriebsmoment vorgegeben werden. Der Fahrpedalgradient entspricht in dem einen Fall einer Winkeldifferenz pro Zeiteinheit und im anderen Fall einer Streckendifferenz pro Zeiteinheit.

Gemäß der bevorzugten erfindungsgemäßen Ausführungsform wird der Verbrennungsmotor dann automatisch aktiviert, wenn zum einen das Sollantriebsmoment größer als die Summe aus dem von dem Elektromotor momentan bereitstellbaren Antriebsmoment und dem Zusatzmoment ist, und wenn gleichzeitig der positive Fahrpedalgradient größer als der vorbestimmte Schwellenwert ist. Durch diese erfindungsgemäße Ausführungsform wird ein vom Fahrer unerwünschter Start des Verbrennungsmotors beispielsweise bei steigender Drehzahl des Elektromotors und einem damit verbundenen Abnehmen des verfügbaren Moments des Elektromotors vermieden.

Der vorbestimmte Schwellenwert ist dabei insbesondere abhängig von der Geschwindigkeit des Fahrzeugs.

Durch diese Geschwindigkeitsabhängigkeit des Schwellenwerts soll es zu keiner für den Fahrer unerwarteten oder unbeherrschbaren Fahrzeugreaktion kommen. Daher wird vorteilhafterweise bei einer geringen Geschwindigkeit des Fahrzeugs mit einem kleineren Schwellenwert gearbeitet, da der potentielle Momentenzuwachs nach der Aktivierung des Verbrennungsmotors zu einer größeren Beschleunigung des Fahrzeugs führen würde, als dies bei einer höheren Geschwindigkeit des Fahrzeugs der Fall wäre. Darüber hinaus wird durch die Geschwindigkeitsabhängigkeit des Schwellenwerts verhindert, dass bei Rangiervorgängen (d.h. bei einer geringen Geschwindigkeit) eine nennenswerte Beschleunigung nach der Aktivierung des Verbrennungsmotors erfolgt, da die Aktivierung des Verbrennungsmotors entsprechend früh (z. B. kurz nachdem das Sollantriebsmoment größer als die Summe aus dem verfügbaren Antriebsmoment des Elektromotors und dem Zusatzmoment ist) erfolgt.

Nach der Aktivierung des Verbrennungsmotors wird das Istantriebsmoment des Fahrzeugs, welches sich nun aus dem von dem Elektromotor bereitgestellten Antriebsmoment und dem von dem Verbrennungsmotor bereitgestellten Antriebsmoment zusammensetzt, insbesondere vergrößert, bis es dem Sollantriebsmoment entspricht. Dazu wird das von dem Verbrennungsmotor und/oder Elektromotor bereitgestellte Antriebsmoment so lange erhöht, bis dieses Istantriebsmoment dem Sollantriebsmoment entspricht. Eine Zeitdauer oder Geschwindigkeit, in/mit welcher diese Überführung durchgeführt wird, bis das Istantriebsmoment dem Sollantriebsmoment entspricht, wird dabei vorteilhafterweise in Abhängigkeit von dem aktuellen Fahrpedalgradienten und/oder von der Geschwindigkeit des Fahrzeugs gewählt.

Bei der Überführung des Istantriebsmoments in das Sollantriebsmoment steht wiederum die Beherrschbarkeit des Fahrzeugs durch den Fahrer im Vordergrund; beispielsweise sollte keine abrupte Beschleunigung des Fahrzeugs erfolgen. Daher wird die Geschwindigkeit, mit welcher das Istantriebsmoment in das Sollantriebsmoment überführt wird, umso geringer gewählt, je geringer die aktuelle Geschwindigkeit des Fahrzeugs ist. Mit anderen Worten ist der Anstieg des Istantriebsmoments flacher, wenn die Fahrzeuggeschwindigkeit gering ist, und steiler, wenn die Fahrzeuggeschwindigkeit hoch ist. Der Fahrer hat allerdings die Möglichkeit, die Geschwindigkeit der Überführung und damit die Zeitdauer, bis das Istantriebsmoment dem Sollantriebsmoment entspricht, durch den Fahrpedalgradienten zu beeinflussen. Bei einem hohen Fahrpedalgradient (d.h. wenn der Fahrer das Fahrpedal rasch durchgedrückt hat) erfolgt die Überführung des Istantriebsmoments in das Sollantriebsmoment schneller (mit einer höheren Geschwindigkeit oder in einer geringeren Zeitdauer), als wenn der Fahrpedalgradient gering ist (d.h. wenn der Fahrer das Fahrpedal langsam betätigt).

Vorteilhafterweise wird das erfindungsgemäße Verfahren nur durchgeführt, wenn eine vorbestimmte Betriebsart des Fahrzeugs bzw. ein spezieller Modus der Betriebsstrategie des Fahrzeugs ausgewählt ist. Diese Betriebsart oder dieser spezielle Modus kann beispielsweise durch das Betätigen einer E-Fahrtaste aktiviert werden.

Im Rahmen der vorliegenden Erfindung wird auch eine Steuerung zur Aktivierung eines Verbrennungsmotors für ein Fahrzeug bereitgestellt. Dabei ist die Steuerung derart ausgestaltet, dass die Steuerung in der Regel über die Stellung des Fahrpedals ein Sollantriebsmoment, von dem Elektromotor ein von diesem aktuell bereitstellbares Antriebsmoment sowie ein vorbestimmtes Zusatzmoment erfasst. Die Steuerung aktiviert den Verbrennungsmotor dann, wenn das erfasste Sollantriebsmoment größer als die Summe aus dem aktuell von dem Elektromotor bereitstellbaren Antriebsmoment und dem Zusatzmoment ist.

Die Vorteile der erfindungsgemäßen Steuerung entsprechen den Vorteilen des erfindungsgemäßen Verfahrens, welche vorab im Detail ausgeführt sind, so dass hier auf eine Wiederholung verzichtet wird.

Schließlich wird im Rahmen der vorliegenden Erfindung ein Fahrzeug bereitgestellt, welches einen Verbrennungsmotor, einen Elektromotor und eine erfindungsgemäße Steuerung umfasst.

Die vorliegende Erfindung ist insbesondere für Hybridfahrzeuge geeignet, welche zum Antrieb des Fahrzeugs sowohl einen Elektromotor als auch einen Verbrennungsmotor umfassen. Selbstverständlich ist die vorliegende Erfindung nicht auf diesen bevorzugten Anwendungsbereich beschränkt, da die vorliegende Erfindung auch bei Schiffen, Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen im Detail mit Bezug zu den Figuren beschrieben.
- In Fig. 1: sind erfindungsgemäße Verläufe des Fahrpedalwinkels, des Sollantriebsmoments und des Istantriebsmoments über der Zeit dargestellt.
- In Fig. 2: ist schematisch ein erfindungsgemäßes Fahrzeug mit einer erfindungsgemäßen Steuerung dargestellt.

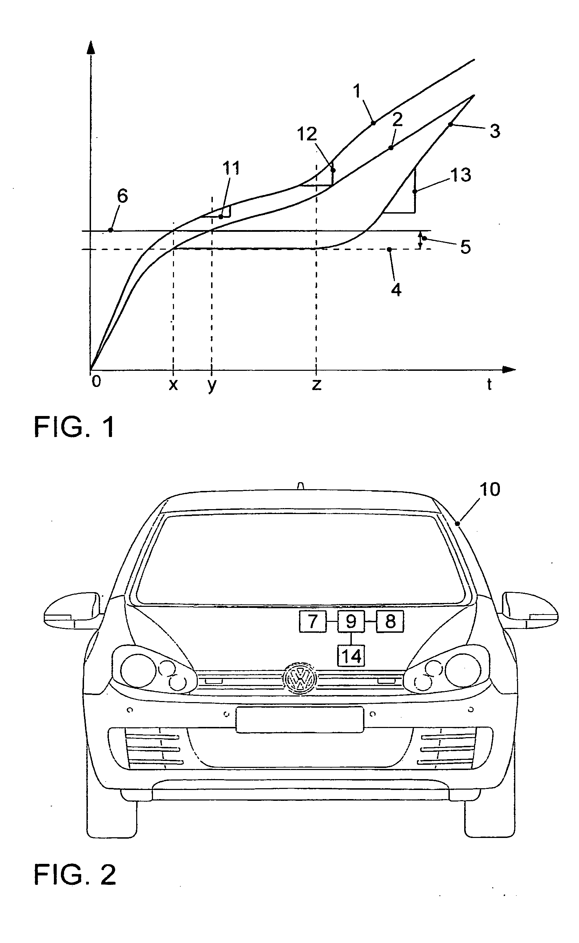

In Fig. 1 ist der Verlauf des Fahrpedalwinkels 1, der Verlauf des Sollantriebsmoments 2 und der Verlauf des Istantriebsmoments 3 oder Vortriebsmoments eines Hybridfahrzeugs, welches zum Antrieb einen Elektromotor und einen Verbrennungsmotor umfasst, über der Zeit t dargestellt. Zum Zeitpunkt t=0 wird Elektromotor gestartet, während der Verbrennungsmotor nicht aktiviert ist, so dass das Fahrzeug zu Beginn rein elektrisch fährt.

Um das Fahrzeug zu beschleunigen, drückt der Fahrer das Fahrpedal des Fahrzeugs weiter durch, was durch den ansteigenden Verlauf des Fahrpedalwinkels 1 dargestellt ist. Der Verlauf des Sollantriebsmoments 2, welches von dem Fahrpedalwinkel 1 abhängt, entspricht im Wesentlichen dem Verlauf des Fahrpedalwinkels 1.

Zum Zeitpunkt t=x entspricht das Sollantriebsmoment 2 dem von dem Elektromotor bereitstellbaren Moment 4. Bei einem Hybridfahrzeug nach dem Stand der Technik würde also zu diesem Zeitpunkt t=x der Verbrennungsmotor gestartet werden. Erfindungsgemäß erfolgt die Aktivierung des Verbrennungsmotors zum Zeitpunkt t=x noch nicht, da der Verbrennungsmotor erst dann gestartet wird, wenn das Sollantriebsmoment 2 größer als die Summe aus dem von dem Elektromotor bereitstellbaren Antriebsmoment 4 und dem Zusatzmoment bzw. Offset 5 ist. Da der Elektromotor ab dem Zeitpunkt t=x nicht mehr in der Lage ist, das Sollantriebsmoment bereitzustellen, trennt sich zum Zeitpunkt t=x der Verlauf des Sollantriebsmoments 2 von dem Verlauf des Istantriebsmoments 3.

Diese Bedingung, dass das Sollantriebsmoment 2 gleich der Summe aus dem von dem Elektromotor bereitstellaren Antriebsmoment 4 und dem Zusatzmoment 5 ist, ist zum Zeitpunkt t=y erfüllt. Da allerdings zu diesem Zeitpunkt t=y der Fahrpedalgradient 11 unterhalb eines vorbestimmten Schwellenwerts liegt, wird der Verbrennungsmotor noch nicht aktiviert.

Erst zum Zeitpunkt t=z liegt der Fahrpedalgradient 12 über dem vorbestimmten Schwellenwert. Da zu diesem Zeitpunkt t=z auch das Sollantriebsmoment 2 größer als die Summe aus dem von dem Elektromotor bereitstellbaren Antriebsmoment 4 und dem Zusatzmoment 5 ist, wird zu diesem Zeitpunkt t=z der Verbrennungsmotor gestartet.

Da sich das Istantriebsmoment 3 ab dem Zeitpunkt t=z durch das Antriebsmoment des Elektromotors und durch das Antriebsmoment des Verbrennungsmotors zusammensetzt, steigt das Istantriebsmoment 3 ab dem Zeitpunkt t=z an. Die Steigung dieses Anstiegs oder der Gradient 13 hängt zum einen von der aktuellen Geschwindigkeit des Fahrzeugs und zum anderen von dem Fahrpedalgradienten 12 zum Zeitpunkt t=z ab.

Es sei darauf hingewiesen, dass der Verlauf des Vortriebmoments oder Istantriebsmoments 3 zwischen den Zeitpunkten x und z eine Art Plateau ausbildet. D.h. das Istantriebsmoment 3 bleibt nahezu konstant, obwohl der Fahrer das Fahrpedal weiter durchgedrückt hat. Der Fahrer erkennt mit anderen Worten daran, dass das Istantriebsmoment 3 nahezu konstant bleibt, obwohl der Fahrer das Fahrpedal weiter durchgedrückt hat, dass sich das Fahrzeug kurz davor befindet, den Zustand "E-Fahren" (d.h. den Zustand des rein elektrischen Fahrens) zu verlassen, da das über das Fahrpedal gewählte Sollantriebsmoment größer als das von dem Elektromotor bereitzustellende Antriebsmoment ist. Dadurch erhält der Fahrer vorteilhafterweise die Möglichkeit, entweder die Aktivierung des Verbrennungsmotors zu provozieren, indem er das Fahrpedal rasch weiter durchgedrückt und damit den Fahrpedalgradient über den vorbestimmten Schwellenwert anhebt, oder die Aktivierung des Verbrennungsmotors zu vermeiden, indem er beispielsweise das Fahrpedal leicht loslässt und damit das Sollantriebsmoment wieder in einen Bereich bringt, in welchem das Sollantriebsmoment allein von dem Elektromotor geleistet werden kann. Anders ausgedrückt spürt der Fahrer durch das Plateau vorteilhafterweise, dass er sich an der Grenze des Zustands "E-Fahren" befindet und kann daher selbst entscheiden, ob er weiter im Zustand "E-Fahren" bleiben will oder ob er diesen Zustand verlassen will.

In Fig. 2 ist schematisch ein erfindungsgemäßes Fahrzeug 10 dargestellt. Neben einem Verbrennungsmotor 7, einem Elektromotor 8 und einem Fahrpedal 14 umfasst das erfindungsgemäße Fahrzeug 10 eine erfindungsgemäße Steuerung 9.

## Patentansprüche

1. Verfahren zur Aktivierung eines Verbrennungsmotors (7) für ein Fahrzeug (10),
wobei das Fahrzeug (10) einen Elektromotor (8) und den Verbrennungsmotor (7) jeweils zum Antrieb des Fahrzeugs (10) umfasst, und
wobei der Verbrennungsmotor (7) automatisch aktiviert wird, wenn ein Sollantriebsmoment (2) größer als eine Summe aus einem von dem Elektromotor (8) momentan bereitstellbaren Antriebsmoment (4) und einem Zusatzmoment (5) ist, wobei das Zusatzmoment größer als Null ist.

2. Verfahren nach Anspruch 1, **dadurch gekennzeichnet, dass** das Zusatzmoment (5) von der Geschwindigkeit des Fahrzeugs (10) und/oder von dem von dem Elektromotor (8) aktuell bereitstellbaren Antriebsmoment (4) abhängt.

3. Verfahren nach Anspruch 2,
**dadurch gekennzeichnet,**
**dass** das Zusatzmoment (5) umso größer ist, je höher die Geschwindigkeit ist, und/oder dass das Zusatzmoment (5) umso kleiner ist, je kleiner das von dem Elektromotor (8) aktuell bereitstellbare Antriebsmoment (4) ist.

4. Verfahren nach einer der vorhergehenden Ansprüche,
**dadurch gekennzeichnet,**
**dass** der Verbrennungsmotor (7) nur automatisch aktiviert wird, wenn ein Fahrpedalgradient (11, 12) größer als ein Schwellenwert ist, und
**dass** der Fahrpedalgradient (11, 12) einer Geschwindigkeit entspricht, mit welcher ein Fahrpedal (14) des Fahrzeugs (10) bewegt wird.

5. Verfahren nach Anspruch 4, **dadurch gekennzeichnet, dass** der Schwellenwert abhängig von der Geschwindigkeit des Fahrzeugs (10) ist.

6. Verfahren nach einem der vorhergehenden Ansprüche,
**dadurch gekennzeichnet,**
**dass** nach einer Aktivierung des Verbrennungsmotors (7) ein Istantriebsmoment (3), welches sich aus einem von dem Elektromotor (8) bereitgestellten Antriebsmoment und einem von dem Verbrennungsmotor (7) bereitgestellten Antriebsmoment zusammensetzt, vergrößert wird, indem das von dem Verbrennungsmotor (7) bereitgestellte Antriebsmoment erhöht wird, um das Istantriebsmoment (3) in das Sollantriebsmoment (2) zu überführen, und dass eine Zeitdauer, in welcher diese Überführung vollständig durchgeführt wird, abhängig von dem Fahrpedalgradienten (11, 12) und/oder von der Geschwindigkeit des Fahrzeugs (10) gewählt wird.

7. Verfahren nach Anspruch 6,
**dadurch gekennzeichnet,**
**dass** die Zeitdauer umso kürzer gewählt wird, umso größer der Fahrpedalgradient (11, 12) ist, und/oder
**dass** die Zeitdauer umso kürzer gewählt wird, umso größer die Geschwindigkeit ist.

8. Verfahren nach einem der vorhergehenden Ansprüche, **dadurch gekennzeichnet, dass** das Verfahren nur in einer vorbestimmten Betriebsart des Fahrzeugs (10) durchgeführt wird.

9. Steuerung zur Aktivierung eines Verbrennungsmotors (7) für ein Fahrzeug (10),
wobei das Fahrzeug (10) einen Elektromotor (8) und den Verbrennungsmotor (7) jeweils zum Antrieb des Fahrzeugs (10) umfasst,
wobei die Steuerung (9) derart ausgestaltet ist, dass die Steuerung (9) ein Sollantriebsmoment (2), ein Zusatzmoment (6) und ein aktuell von dem Elektromotor (8) bereitstellbares Antriebsmoment 4) erfasst, wobei das Zusatzmoment größer als Null ist, und
wobei die Steuerung (9) derart ausgestaltet ist, dass die Steuerung (9) den Verbrennungsmotor (7) aktiviert, wenn das Sollantriebsmoment (2) größer als eine Momentensumme aus dem momentan von dem Elektromotor (8) bereitstellbaren Antriebsmoment (4) und aus dem Zusatzmoment (5) ist.

10. Steuerung nach Anspruch 9, **dadurch gekennzeichnet, dass** die Steuerung (9) zur Durchführung des Verfahrens nach einem der Ansprüche 1-8 ausgestaltet ist.

11. Fahrzeug mit einem Verbrennungsmotor (7), einem Elektromotor (8) und einer Steuerung (9) nach Anspruch 9 oder 10.

## Claims

1. Method for activating an internal combustion engine (7) for a vehicle (10), wherein the vehicle (10) comprises an electric motor (8) and the internal combustion engine (7), in each case for driving the vehicle (10), and wherein the internal combustion engine (7) is automatically activated when a setpoint drive torque (2) is greater than a sum of a drive torque (4) which can be provided by the electric motor (8) at that moment and an additional torque (5), wherein the additional torque is greater than zero.

2. Method according to Claim 1, **characterized in that** the additional torque (5) depends on the speed of the vehicle (10) and/or on the drive torque (4) which can currently be provided by the electric motor (8).

3. Method according to Claim 2, **characterized in that** the higher the speed, the greater the additional torque (5), and/or **in that** the smaller the drive torque (4) which can currently be provided by the electric motor (8), the smaller the additional torque (5).

4. Method according to one of the preceding claims, **characterized in that** the internal combustion engine (7) is only automatically activated when an accelerator pedal gradient (11, 12) is greater than a threshold value, and **in that** the accelerator pedal gradient (11, 12) corresponds to a speed with which an accelerator pedal (14) of the vehicle (10) is moved.

5. Method according to Claim 4, **characterized in that** the threshold value is dependent on the speed of the vehicle (10).

6. Method according to one of the preceding claims, **characterized in that**, following activation of the internal combustion engine (7), an actual drive torque (3), which is made up of a drive torque which is provided by the electric motor (8) and a drive torque which is provided by the internal combustion engine (7), is increased by the drive torque which is provided by the internal combustion engine (7) being increased in order to adjust the actual drive torque (3) to the setpoint drive torque (2), and **in that** a time period in which this adjustment is completely carried out is selected depending on the accelerator pedal gradient (11, 12) and/or on the speed of the vehicle (10).

7. Method according to Claim 6, **characterized in that** the greater the accelerator pedal gradient (11, 12), the shorter the time period is selected to be, and/or in that the greater the speed, the shorter the time period is selected to be.

8. Method according to one of the preceding claims, **characterized in that** the method is carried out only in a predetermined operating mode of the vehicle (10).

9. Control system for activating an internal combustion engine (7) for a vehicle (10), wherein the vehicle (10) comprises an electric motor (8) and the internal combustion engine (7), in each case for driving the vehicle (10), wherein the control system (9) is designed in such a way that the control system (9) detects a setpoint drive torque (2), an additional torque (6) and a drive torque (4) which can currently be provided by the electric motor (8), wherein the additional torque is greater than zero, and wherein the control system (9) is designed in such a way that the control system (9) activates the internal combustion engine (7) when the setpoint drive torque (2) is greater than a torque sum of the drive torque (4) which can be provided by the electric motor (8) at that moment and the additional torque (5).

10. Control system according to Claim 9, **characterized in that** the control system (9) is designed to carry out the method according to one of Claims 1-8.

11. Vehicle having an internal combustion engine (7), an electric motor (8) and a control system (9) according to Claim 9 or 10.

## Revendications

1. Procédé d'activation d'un moteur à combustion interne (7) pour un véhicule (10), le véhicule (10) présentant un moteur électrique (8) et le moteur à combustion interne (7) à chaque fois pour l'entraînement du véhicule (10), et
le moteur à combustion interne (7) étant activé automatiquement lorsqu'un couple d'entraînement de consigne (2) est supérieur à une somme d'un couple d'entraînement (4) pouvant être fourni actuellement par le moteur électrique (8) et d'un couple supplémentaire (5), le couple supplémentaire étant supérieur à zéro.

2. Procédé selon la revendication 1, **caractérisé en ce que** le couple supplémentaire (5) dépend de la vitesse du véhicule (10) et/ou du couple d'entraînement (4) pouvant être fourni actuellement par le moteur électrique (8).

3. Procédé selon la revendication 2, **caractérisé en ce que** le couple supplémentaire (5) est d'autant plus grand que la vitesse est élevée et/ou **en ce que** le couple supplémentaire (5) est d'autant plus faible que le couple d'entraînement (4) pouvant être fourni actuellement par le moteur électrique (8) est faible.

4. Procédé selon l'une quelconque des revendications précédentes, **caractérisé en ce que** le moteur à combustion interne (7) n'est activé automatiquement que lorsqu'un gradient de pédale d'accélération (11, 12) est supérieur à une valeur seuil, et
**en ce que** le gradient de pédale d'accélération (11, 12) correspond à une vitesse à laquelle une pédale d'accélération (14) du véhicule (10) est déplacée.

5. Procédé selon la revendication 4, **caractérisé en ce que** la valeur seuil dépend de la vitesse du véhicule (10).

6. Procédé selon l'une quelconque des revendications précédentes, **caractérisé en ce qu'**après une activation du moteur à combustion interne (7), un couple d'entraînement actuel (3), qui se compose d'un couple d'entraînement fourni par le moteur électrique (8) et d'un couple d'entraînement fourni par le moteur à combustion interne (7), est augmenté, **en ce que** le couple d'entraînement fourni par le moteur à combustion interne (7) est augmenté, afin de transférer le couple d'entraînement actuel (3) en le couple d'entraînement de consigne (2), et
**en ce qu'**une durée pendant laquelle ce transfert est complètement effectué est sélectionnée en fonction du gradient de pédale d'accélération (11, 12) et/ou de la vitesse du véhicule (10).

7. Procédé selon la revendication 6, **caractérisé en ce que** la durée est sélectionnée de manière à être d'autant plus courte que le gradient de pédale d'accélération (11, 12) est élevé, et/ou en ce que la durée est sélectionnée de manière à être d'autant plus courte que la vitesse est élevée.

8. Procédé selon l'une quelconque des revendications précédentes, **caractérisé en ce que** le procédé n'est mis en oeuvre que dans un mode de fonctionnement prédéterminé du véhicule (10).

9. Commande d'activation d'un moteur à combustion interne (7) pour un véhicule (10), le véhicule (10) présentant un moteur électrique (8) et le moteur à combustion interne (7) à chaque fois pour l'entraînement du véhicule (10),
la commande (9) étant configurée de telle sorte que la commande (9) détecte un couple d'entraînement de consigne (2), un couple supplémentaire (5) et un couple d'entraînement (4) pouvant être fourni actuellement par le moteur électrique (8), le couple supplémentaire étant supérieur à zéro, et la commande (9) étant configurée de telle sorte que la commande (9) active le moteur à combustion interne (7) lorsque le couple d'entraînement de consigne (2) est supérieur à une somme de couples constituée du couple d'entraînement (4) pouvant être fourni actuellement par le moteur électrique (8) et du couple supplémentaire (5).

10. Commande selon la revendication 9, **caractérisée en ce que** la commande (9) est configurée pour mettre en oeuvre le procédé selon l'une quelconque des revendications 1 à 8.

11. Véhicule comprenant un moteur à combustion interne (7), un moteur électrique (8) et une commande (9) selon la revendication 9 ou 10.
